(19) Europäisches Patentamt
European Patent Office
Office européen des brevets

(11) **EP 4 280 111 A1**

(12) **EUROPEAN PATENT APPLICATION**

(43) Date of publication:
**22.11.2023 Bulletin 2023/47**

(21) Application number: **23165280.1**

(22) Date of filing: **30.03.2023**

(51) International Patent Classification (IPC):
**G06N 3/0464** (2023.01)   **G06N 3/045** (2023.01)
**G06N 3/063** (2023.01)

(52) Cooperative Patent Classification (CPC):
**G06N 3/0464; G06N 3/045; G06N 3/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.05.2022   CN 202210552365**

(71) Applicant: **Beijing Horizon Information
Technology Co., Ltd.
Beijing 100094 (CN)**

(72) Inventors:
• **ZHAO, Zhuoran**
  **BEIJING, 100094 (CN)**
• **GU, Zhao**
  **BEIJING, 100094 (CN)**
• **LI, Delin**
  **BEIJING, 100094 (CN)**
• **LI, Jianjun**
  **BEIJING, 100094 (CN)**
• **WANG, Zhenjiang**
  **BEIJING, 100094 (CN)**

(74) Representative: **Kolster Oy Ab
Salmisaarenaukio 1
P.O. Box 204
00181 Helsinki (FI)**

(54) **PROCESSING METHOD AND APPARATUS FOR CONVOLUTIONAL NEURAL NETWORK, MEDIUM, AND DEVICE**

(57)     A method includes: obtaining an input feature map; processing the input feature map by using a dilated convolution layer of the convolutional neural network, to obtain a plurality of local feature maps; obtaining a plurality of local output feature maps by performing zero padding on the plurality of local feature maps performing convolution processing on the plurality of zero-padded local feature maps; and fusing the plurality of local output feature maps, to obtain an output feature map processed by the dilated convolution layer. A plurality of consecutive local feature maps can be split from the input feature map. The local feature map can be performed with convolution processing by using a compact convolution kernel. Performing dilated convolution processing on the input feature map under a premise of not increasing computational complexity overcomes limitation of holes on a dilated convolution algorithm, and can realize data reuse between adjacent sliding windows.

EP 4 280 111 A1

**Description**

**FIELD OF THE INVENTION**

This disclosure relates to a processing method and an apparatus for a convolutional neural network, a storage medium, and an electronic device.

**BACKGROUND OF THE INVENTION**

In practice, when processing data (such as image data or text data) by using a convolutional neural network, to improve an awareness range of a feature extraction operation in a Euclidean space of an image, a stacked small-scale convolution kernel (such as a $1 \times 1$ convolution kernel or a $3 \times 3$ convolution kernel) and a down-sampling manner are usually used. Since resolution of a feature map may be lost due to a down-sampling operation, accuracy of a target detection task and a semantic segmentation task may be affected. Therefore, in such a task, down-sampling is usually not introduced into the convolutional neural network, but dilated convolution is used to expand the awareness range and maintain precision with high resolution at the same time. The dilated convolution, which is also referred to as atrous convolution or expansion convolution, is a process of adding some holes between elements of the convolution kernel to expand the convolution kernel. A dilation rate is used to represent a stride between two adjacent elements of the convolution kernel. For example, when the dilation rate is n (n is an integer greater than zero), a quantity of holes between two adjacent elements of the convolution kernel in a same row or in a same column is (n-1).

When a neural network accelerator is performing convolution processing, a sliding window method is usually used to read feature data from the feature map. In this way, the feature data read from a previous window can be partially reused, thereby reducing a memory access overhead.

In the related art, when an input feature map is processed by using a dilated convolution layer, the following two manners are usually used. One is to perform weight zero filling on the holes in the dilated convolution kernel to form a new convolution kernel, and then process the input feature map by using the new convolution kernel. The other is to directly extract a plurality of local feature maps with holes by taking the dilation rate as a stride, and then process the extracted local feature maps based on pre-designed data fetching logic. Due to limitation of the hole, computational complexity of the first processing manner is increased significantly. Moreover, the second processing manner may lead to a memory access bottleneck, so that an application scope of the dilated convolution layer is limited.

**SUMMARY OF THE INVENTION**

To resolve the foregoing technical problem, this disclosure is proposed. Embodiments of this disclosure provide a processing method and an apparatus for a convolutional neural network, a storage medium, and an electronic device.

According to an aspect of embodiments of this disclosure, a processing method for a convolutional neural network is provided, including: obtaining an input feature map; processing the input feature map by using a dilated convolution layer of the convolutional neural network, to obtain a plurality of local feature maps; obtaining a plurality of local output feature maps by performing zero padding on the plurality of local feature maps and performing convolution processing on the plurality of zero-padded local feature maps; and fusing the plurality of local output feature maps, to obtain an output feature map processed by the dilated convolution layer.

According to another aspect of embodiments of this disclosure, an processing apparatus for a convolutional neural network is provided, including: an obtaining unit, configured to obtain an input feature map; a splitting unit, configured to process the input feature map by using a dilated convolution layer of the convolutional neural network, to obtain a plurality of local feature maps; a convolutional unit, configured to perform zero padding on the plurality of local feature maps, and perform convolution processing on the plurality of zero-padded local feature maps, to obtain a plurality of local output feature maps; and a fusing unit, configured to fuse the plurality of local output feature maps, to obtain an output feature map processed by the dilated convolution layer.

According to still another aspect of embodiments of this disclosure, a computer readable storage medium is provided, comprising a computer program stored thereon, which, on being run, is configured to execute the foregoing method.

According to yet another aspect of embodiments of this disclosure, an electronic device is provided, wherein the electronic device includes: a processor; and a memory configured to store processor-executable instructions, where the processor is configured to read the executable instructions from the memory and execute the instructions to implement the foregoing method.

According to the method for processing a convolutional neural network in this disclosure, the input feature map of the dilated convolution layer can be split into a plurality of local feature maps; subsequently, the local feature maps are performed with convolution processing by using a convolution kernel, to obtain a plurality of local output feature maps; and finally, the respective local output feature maps are fused into the output feature map. A plurality of consecutive local feature maps can be split from the input feature map. The local feature maps can be performed with convolution processing by using a compact convolution kernel. Performing dilated convolution processing on the input feature map under a premise of not increasing computational complexity overcomes limitation of holes on a hole convolution algorithm, and can realize data reuse between adjacent sliding windows. This reduces a memory access overhead and helps to expand an application scope of the dilated convolution algorithm.

The technical solutions of this disclosure are further described below in detail with reference to the accompanying drawings and the embodiments.

## BRIEF DESCRIPTION OF THE DRAWINGS

By describing the embodiments of this disclosure more detailed with reference to the accompanying drawings, the foregoing and other objectives, features, and advantages of this disclosure will become more apparent. The accompanying drawings are used to provide further understanding of the embodiments of this disclosure, and constitute a part of the specification. The accompanying drawings are used to explain this disclosure together with the embodiments of this disclosure, and do not constitute limitation to this disclosure. In the accompanying drawings, same reference numerals generally represent same components or steps.

FIG. 1 is a schematic diagram of a scenario to which a processing method for a convolutional neural network is applicable according to this disclosure;

FIG. 2 is a schematic flow chart of a processing method for a convolutional neural network according to an embodiment of this disclosure;

FIG. 3 is a schematic flow chart of a processing method for a convolutional neural network according to another embodiment of this disclosure;

FIG. 4 is a schematic diagram of a scenario of a processing method for a convolutional neural network according to this disclosure;

FIG. 5 is a schematic flow chart of a postponement operation of a processing method for a convolutional neural network according to an embodiment of this disclosure;

FIG. 6 is a schematic flow chart of a pre-posing operation of a processing method for a convolutional neural network according to an embodiment of this disclosure;

FIG. 7 is a schematic diagram of a scenario of a processing method for a convolutional neural network according to this disclosure;

FIG. 8 is a schematic flow chart of consecutive dilated convolutions of a processing method for a convolutional neural network according to an embodiment of this disclosure;

FIG. 9 is a schematic structural diagram of a processing apparatus for a convolutional neural network according to an embodiment of this disclosure; and

FIG. 10 is a structural diagram of an electronic device according to an exemplary embodiment of this disclosure.

## DETAILED DESCRIPTION OF THE EMBODIMENTS

Exemplary embodiments of this disclosure are described below in detail with reference to the accompanying drawings. Obviously, the described embodiments are merely a part, rather than all of embodiments of this disclosure. It should be understood that this disclosure is not limited by the exemplary embodiments described herein.

It should be noted that the scope of this disclosure is not limited by relative arrangement, numeric expressions, and numerical values of components and steps described in these embodiments, unless otherwise specified.

A person skilled in the art may understand that terms such as "first" and "second" in the embodiments of this disclosure are merely configured to distinguish between different steps, devices, or modules, and indicate neither any particular technical meaning, nor necessarily logical ordering among them.

It should be further understood that, in the embodiments of this disclosure, the term "multiple"/"a plurality of" may refer to two or more; and the term "at least one" may refer to one, two, or more.

It should be further understood that, any component, data, or structure involved in the embodiments of this disclosure can be generally construed to one or more, unless clearly stated or the context indicates otherwise.

In addition, the term "and/or" in this disclosure refers to only an association relationship that describes associated objects, which indicates presence of three relationships. For example, A and/or B may indicate presence of three cases: A alone, both A and B, and B alone. In addition, the character "/" in this disclosure generally indicates an "or" relationship of associated objects.

It should be further understood that, the descriptions of the various embodiments of this disclosure focus on differences among the various embodiments. The same or similar parts among the embodiments may refer to one another. For concision, description will be omitted.

Meanwhile, it should be understood that, for ease of description, the accompanying drawings are not necessarily to scale in size of any of parts shown therein.

Descriptions of at least one exemplary embodiment below are actually illustrative only, and never serve as any limitation to this disclosure along with application or use thereof.

Technologies, methods, and devices known by a person of ordinary skills in the art may not be discussed in detail herein. However, where appropriate, the technologies, the methods, and the devices shall be regarded as a part of the specification.

It should be noted that, similar signs and letters in the following accompanying drawings indicate similar items. Therefore, once a certain item is defined in one of the accompanying drawings, there is no need to further discuss the item in the subsequent accompanying drawings.

The embodiments of this disclosure can be applicable to an electronic device such as a terminal device, a computer system, a server, and the like, which can be operated together with numerous other general-purpose or special-purpose computing system environments or configurations. Well-known examples of a terminal device, a computing system, and environment and/or configuration applicable to be used with the terminal device, the computer system, the server, and other electronic devices include but are not limited to: a personal computer system, a server computer system, a thin client, a thick client, a handheld or laptop device, a microprocessor-based system, a set-top box, programmable consumer electronics, a network personal computer, a small computer system, a mainframe computer system, and a distributed cloud computing technology environment including any of the foregoing systems.

The electronic device such as a terminal device, a computer system, or a server can be described in general context of a computer system-executable instruction (such as a program module) executed by the computer system. Generally, the program module may include a routine, a program, a target program, a component, logic, a data structure, and the like that execute particular tasks or implement particular abstract data types. The computer system/server may be implemented in a distributed cloud computing environment. In the distributed cloud computing environment, a task is performed by a remote processing device linked through a communications network. In the distributed cloud computing environment, the program module may be located on a storage medium of a local or remote computing system including a storage device.

### Application overview

In related technologies, when a feature is processed by using a dilated convolution layer in a convolutional neural network, the following two manners are usually used. One is to perform weight zero filling on holes in a dilated convolution kernel (that is, a convolution kernel with holes), that is, filling the holes in the dilated convolution kernel with elements with weight of zero, to form a new convolution kernel; and then process the feature by using the new convolution kernel. Regarding the other one, zero padding needs to be performed on an input feature map first; subsequently, a local feature map is extracted from the zero-padded feature map by using a dilated convolution kernel with a dilation rate as a stride; and then the extracted local feature map is performed with convolution processing based on pre-designed data fetching logic.

In a process of implementing this disclosure, according to the first processing manner, computational complexity is increased significantly because weight zero filling is used and a larger convolution kernel is formed. For the second manner, because there are holes in the extracted local feature map, additional data fetching logic needs to be designed for a neural network accelerator to support dilated convolution. Moreover, local feature data cannot be reused between adjacent sliding windows, which easily leads to a memory access bottleneck.

It can be learned from the above that both the foregoing two processing manners have limitations, and thus an application scope of dilated convolution is limited.

### Exemplary system

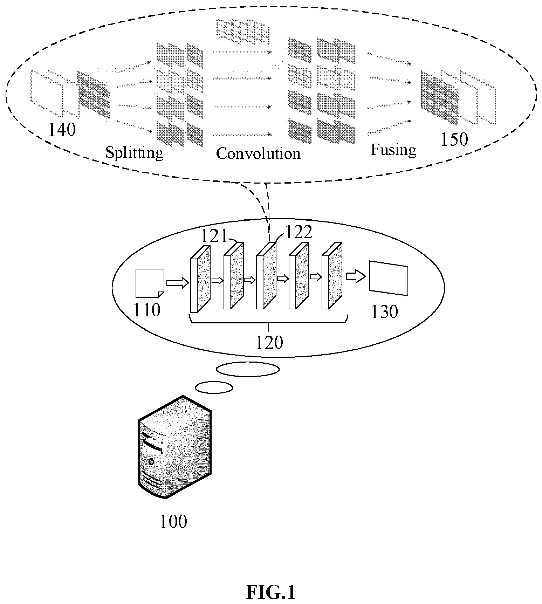

A processing method for a convolutional neural network according to this disclosure is described below with reference to FIG. 1. FIG. 1 shows a diagram of a scenario to which a processing method for a convolutional neural network is applicable according to this disclosure. As shown in FIG. 1, an electronic device 100 (for example, which may be a terminal device or a server) can perform various tasks by using a pre-trained convolutional neural network 120. For example, the various tasks can include target detection, semantic segmentation, optical flow prediction, and depth prediction. The electronic device 100 can take a to-be-processed image 110 as input of the convolutional neural network 120. An image feature is extracted from the convolutional neural network by using a middle layer of the convolutional neural network 120, and then a prediction result 130 of the to-be-processed image is generated based on the extracted image feature through feature mapping.

The middle layer of the convolutional neural network 120 at least includes a dilated convolution layer 122. The dilated convolution layer refers to a layer including at least one dilated convolution kernel. The dilated convolution kernel is formed after a convolution kernel is expanded according to a preset dilation rate. When a feature map is input to the dilated convolution layer at a previous processing step (for example, a convolutional layer 121) of the dilated convolution layer, the dilated convolution layer 122 can first split an input feature map 140 into a plurality of local feature maps, and perform zero padding on the local feature maps. Subsequently, the zero-padded local feature maps are performed with convolution processing by using the convolution kernel, to obtain a plurality of local output feature maps. Finally, the plurality of local output feature maps are fused to obtain an output feature map 150 of the dilated convolution layer 122, and the output feature map 150 is output to a next processing step. Consecutive local feature maps can be split from the input feature map. The local feature map can be performed with convolution processing by using the compact convolution kernel. Performing dilated convolution processing on the feature map under a premise of not increasing computational complexity can overcome limitation of holes on a hole convolution algorithm, and can realize data reuse between adjacent sliding windows. This reduces a memory access overhead and helps to expand an application scope of the dilated convolution algorithm.

Exemplary method

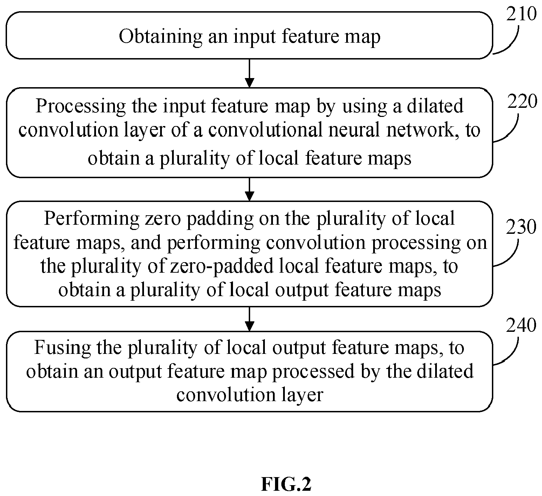

FIG. 2 is a schematic flow chart of a processing method for a convolutional neural network according to an embodiment of this disclosure. As shown in FIG. 2, the procedure includes the following steps.

Step 210. Obtaining an input feature map.

In this embodiment, the input feature map represents image feature data input to a dilated convolution layer, for example, it may be an image feature (for example, which may be a feature map) output at a previous processing step (for example, a convolutional layer) of the dilated convolution layer. For another example, when the dilated convolution layer is a first processing step of a middle layer of the convolutional neural network, the input feature map may be a to-be-processed image input to the convolutional neural network.

Step 220. Processing the input feature map by using a dilated convolution layer of the convolutional neural network, to obtain a plurality of local feature maps.

In this embodiment, the dilated convolution layer is a layer including at least one dilated convolution kernel. The dilated convolution kernel is formed after a convolution kernel (i.e., a compact convolution kernel without holes) is expanded according to a preset dilation rate of the dilated convolution layer.

Step 230. Performing zero padding on the plurality of local feature maps, and performing convolution processing on the plurality of zero-padded local feature maps, to obtain a plurality of local output feature maps.

In this embodiment, an execution body (for example, the electronic device 100 in FIG. 1) can respectively perform zero padding on the plurality of local feature maps based on the dilation rate and a preset zero-padding parameter of the dilated convolution layer, and then respectively perform convolution processing on the plurality of zero-padded local feature maps by using the convolution kernel, to generate the plurality of local output feature maps.

Step 240. Fusing the plurality of local output feature maps, to obtain an output feature map processed by the dilated convolution layer.

In this embodiment, the execution body can determine a position, in a to-be-output feature map, of respective feature values in the local output feature maps based on a position of the respective local feature maps in the input feature map and the zero-padding parameter and the dilation rate of the dilated convolution layer, and then fill respective feature values in the local output feature maps to corresponding positions, to interweave and fuse the local output feature maps. In this way, the output feature map of the dilated convolution layer is obtained.

According to the processing method for a convolutional neural network in this embodiment, the input feature map of the dilated convolution layer can be split into a plurality of local feature maps; subsequently, the local feature maps are performed with convolution processing by using the convolution kernel, to obtain a plurality of local output feature maps; and finally, the respective local output feature maps are fused into the output feature map. The plurality of local feature maps can be split from the input feature map, and convolution processing can be performed by using the compact convolution kernel. In this way, limitation of holes in the local feature map to a hole convolution algorithm is overcome, and data reuse between adjacent sliding windows can be realized. This reduces a memory access overhead and helps to expand an application scope of the dilated convolution algorithm.

In some optional implementations of this embodiment, step 210 can be implemented according to the following manner: splitting the input feature map into the plurality of local feature maps based on the dilation rate of the dilated convolution layer.

For example, the execution body can determine a quantity of the local feature maps based on the dilation rate, and then split the input feature map into a plurality of consecutive regions. Each consecutive region is a local feature map. In this way, the input feature map can be split into a plurality of consecutive local feature maps based on the dilation rate of the dilated convolution layer.

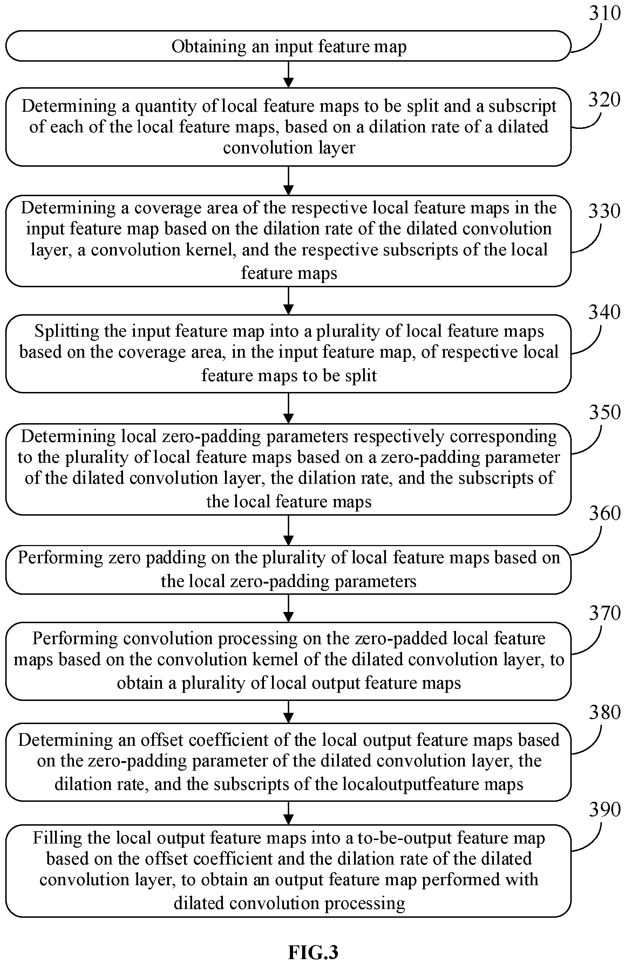

FIG. 3 shows a schematic flow chart of a processing method for a convolutional neural network according to another embodiment of this disclosure. Subsequently, referring to FIG. 3, the procedure includes the following steps.

Step 310. Obtaining an input feature map.

Step 320. Determining a quantity of local feature maps to be obtained through splitting and a subscript of each of the local feature maps, based on a dilation rate of a dilated convolution layer.

In this embodiment, the subscript can be represented by using a pixel coordinate in the input feature map. The subscript of the local feature map represents a positioning coordinate of a dilated convolution kernel when the local feature maps are split from the input feature map by using the dilated convolution kernel. Usually, an element in an upper left corner of the dilated convolution kernel is aligned with the subscript of the local feature map to be split.

For example, if the dilation rate is ($d_h$, $d_w$), it can be determined that the quantity of the local feature maps to be obtained through splitting is $d_h \times d_w$, and the subscript of the local feature map is ($x$, $y$). Here, x may be a positive integer in a range of [0, $d_h$), and y may be a positive integer in a range of [0, $d_w$). Specifically, the dilation rate is (2, 2), and the quantity of the local feature maps to be obtained through splitting is 4. Moreover, subscripts of local feature maps to be obtained through splitting may include (0, 0), (0, 1), (1, 0), and (1, 1).

Step 330. Determining a coverage area of the respective local feature maps in the input feature map based on the dilation rate of the dilated convolution layer, a convolution kernel, and the respective subscripts of the local feature map.

In this embodiment, an execution body can perform expansion processing on the convolution kernel based on the dilation rate, to obtain the dilated convolution kernel. Subsequently, the dilated convolution kernel is mapped to the input feature map based on the subscripts of the local feature maps. Moreover, a collection of coverage areas, in the input feature map, of non-hole elements in the dilated convolution kernel is determined as the coverage area of the local feature maps in the input feature map.

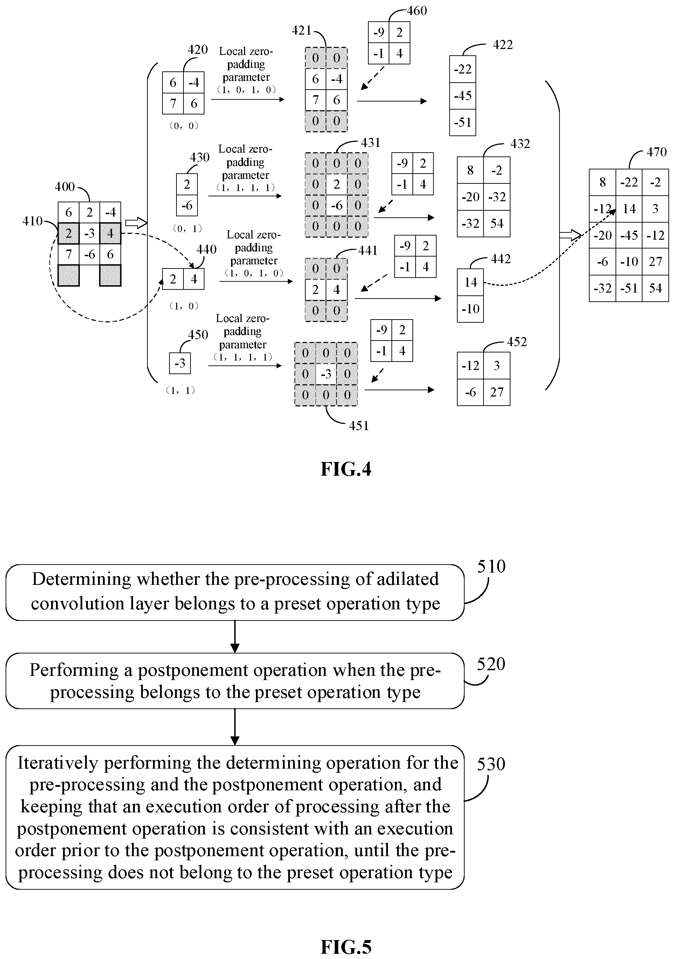

FIG. 4 is a schematic diagram of a scenario of a processing method for a convolutional neural network according to an embodiment of this disclosure. Exemplary description is further made with reference to a scenario shown in FIG. 4. As shown in FIG. 4, a size of an input image 400 is (3, 3), a convolution kernel 460 is a $2 \times 2$ convolution kernel, and the dilation rate is (2, 2). A dilated convolution kernel 410 can be obtained after the expansion processing. The execution body can determine, based on the dilation rate, that the quantity of the local feature maps to be obtained through splitting is 4. A subscript of a local feature map 420 is (0, 0), a subscript of a local feature map 430 is (0, 1), a subscript of a local feature map 440 is (1, 0), and a subscript of a local feature map 450 is (1, 1). Subsequently, the dilated convolution kernel 410 is respectively aligned with the subscript of each local feature map, to determine the coverage area of each local feature map in the input feature map. For example, if the subscript of the local feature map 440 is (1, 0), an element in an upper left corner of the dilated convolution kernel 410 is aligned with a $0^{th}$ element in a first row in the input image 400. A coverage area of a non-hole element of the dilated convolution kernel 410 in the input image 400 is a pixel (1, 0) and a pixel (1, 2). In this way, the obtained local feature map 440 includes feature values of the pixel (1, 0) and the pixel (1, 2), that is, "2" and "14".

Step 340. Splitting the input feature map into a plurality of local feature maps based on the coverage area of respective local feature maps to be split in the input feature map.

In this embodiment, according to steps 320 to 340, the coverage area of respective local feature maps in the input feature map can be determined based on a parameter of the dilated convolution layer, and then the input feature map is split into a plurality of local feature maps based on the coverage area of respective local feature map. The input feature map can be and quickly and accurately split into local feature maps based on the parameter of the dilated convolution layer.

Step 350. Determining local zero-padding parameters respectively corresponding to the plurality of local feature maps based on a zero-padding parameter and the dilation rate of the dilated convolution layer, and the subscripts of the local feature maps.

Exemplary description is continued to be made with reference to the example in step 340. It is assumed that the zero-padding parameter of the dilated convolution layer is (*pht, phl, phb, phr*), which is respectively corresponding to quantities of zero padding in an upward direction, a downward direction, a leftward direction, and a rightward direction of the input feature map. The execution body can determine a local zero-padding parameter of a local feature map with a subscript of ($d_{ih}$, $d_{iw}$) according to formula (1).

$$(floor((p_{ht} + d_{ih})/d_h), floor((p_{wl} + d_{iw})/d_w), floor((p_{hb} + d_{ih})/d_h), floor((p_{wr} + d_{iw})/d_w)) \quad (1)$$

Step 360. Performing zero padding on the plurality of local feature maps based on the local zero-padding parameters.

Description is further made with reference to the example shown in FIG. 4. The execution body can determine local zero-padding parameters of the local feature maps 420, 430, 440, and 450 according to formula (2), and perform zero padding on each local feature map based on the local zero-padding parameters, to obtain zero-padded local feature maps 421, 431, 441, and 451.

Step 370. Performing convolution processing on the zero-padded local feature maps based on the convolution kernel of the dilated convolution layer, to obtain a plurality of local output feature maps.

Description is further made with reference to the example shown in FIG. 4. The execution body can perform convolution processing on the zero-padded local feature maps 421, 431, 441, and 451 respectively by using the convolution kernel 460, to obtain local output feature maps 422, 432, 442, and 452.

In this embodiment, according to steps 350 to 370, the local zero-padding parameter of each local feature map can be determined based on the parameter of the dilated convolution layer, and zero padding is performed on each local feature map on this basis. Subsequently, the zero padded local feature map is performed with convolution processing, to obtain the local output feature map corresponding to each local feature map. In this way, formulation of zero padding and convolution processing for the local feature maps is realized, thereby helping to quickly and accurately perform zero padding and convolution processing on the local feature maps.

Step 380. Determining an offset coefficient of the local output feature maps corresponding to the local feature map based on the zero-padding parameter and the dilation rate of the dilated convolution layer, and the subscripts of the local feature maps.

In this embodiment, the offset coefficient represents an offset between a position of a first feature value (a feature value in a left right corner) in the local output feature map and a position of the first feature value in a to-be-output feature map.

Description is continued to be made with reference to the example in step 350. The execution body can determine an offset coefficient of a local output feature map corresponding to the local feature map with the subscript of ($d_{ih}$, $d_{iw}$) according to formula (2).

$$((p_{ht} + d_{ih})\%d_h, (p_{wl} + d_{iw})\%d_w) \qquad (2)$$

Step 390. Filling the local output feature maps into a to-be-output feature map based on the offset coefficient and the dilation rate of the dilated convolution layer, to obtain an output feature map performed with dilated convolution processing.

Description is continued to be made with reference to the example shown in FIG. 4. The execution body can determine, according to formula (2), that an offset coefficient of the local output feature map 441 corresponding to the local feature map 440 is (1, 1). If a pixel coordinate of the feature value "14" in the local output feature map 441 is (0, 0), a pixel coordinate of the feature value "14" in the to-be-output feature map is (1, 1). According to relative positions of a feature value "-10" and the feature value "14" in the local output feature map 440, it can be learned that vertical coordinates of the two feature values are equal. The execution body can determine, by taking the dilation rate as a stride, that a pixel coordinate of the feature value "-10" in the to-be-output feature map is (3, 1). Subsequently, the execution body can fill the local output feature map 440 into the to-be-output feature map based on the pixel coordinate of each feature value, to obtain an output feature map 470.

In this embodiment, according to steps 380 and 390, the offset coefficient of the local output feature map can be determined based on the parameter of the dilated convolution layer; and then the local output feature map may be filled into the to-be-output feature map with the dilation rate as the stride, to obtain the output feature map of the dilated convolution layer. In this way, formulation of fusion processing on the local output feature maps is realized, thereby helping to accurately and quickly fuse the local output feature maps.

FIG. 5 shows a schematic flow chart of a postponement operation of a processing method for a convolutional neural network according to an embodiment of this disclosure. It can be learned from FIG. 5 that the embodiment shown in FIG. 5 illustrates a processing method of splitting an input image into local feature maps based on a parameter of a dilated convolution layer, and then performing convolution processing on each local feature map, and fusing the respective local output feature maps into an output feature map. In this way, formulation of a dilated convolution processing process in the processing method for a convolutional neural network according to this disclosure is realized, thereby helping to improve efficiency and accuracy of dilated convolution.

Subsequently, referring to FIG. 5, the procedure includes the following steps.

Step 510. Determining whether pre-processing of the dilated convolution layer belongs to a preset operation type.

The preset operation type includes: 1×1 convolution, function activation, feature map multiplication, or feature map addition.

In this embodiment, the pre-processing indicates a previous processing step of the dilated convolution layer in the convolutional neural network.

Step 520. Performing a postponement operation when the pre-processing belongs to the preset operation type.

The postponement operation includes: postponing the pre-processing until the input feature map is split by using the dilated convolution layer, and respectively performing the pre-processing on the plurality of local feature maps.

Step 530. Iteratively performing the determining operation for the pre-processing and the postponement operation, and keep that an execution order of processing after the postponement operation is consistent with an execution order prior to the postponement operation, until the pre-processing does not belong to the preset operation type.

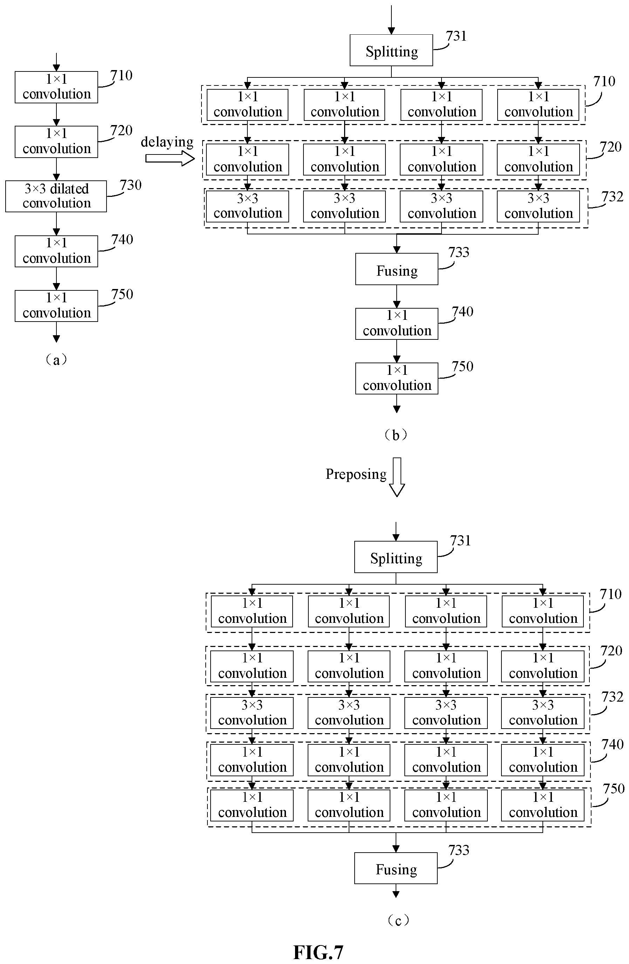

Exemplary description is further made with reference to FIG. 7. FIG. 7 shows a schematic diagram of a scenario of a processing method for a convolutional neural network according to this disclosure. FIG. 7 (a) shows an initial state of some middle layers of a convolutional neural network, including convolutional layers 710, 720, 740, and 750 and a dilated convolution layer 730. The execution body can perform steps 731, 732, and 733 on the dilated convolution layer 730 according to any one of the embodiments shown in FIG. 2 to FIG. 5. Step 731 corresponds to the step of splitting the input feature map into a plurality of local feature maps in any one of the foregoing embodiments. Step 732 corresponds to the step of performing convolution processing on the local feature map in any one of the foregoing embodiments. Step 733 corresponds to the step of fusing the plurality of local output feature maps into the output feature map in any one of the foregoing embodiments. Subsequently, according to steps 520 and 530, the execution body can postpone the convolutional layers 710 and 720 to be after step 731, to obtain the convolutional neural network shown in FIG. 7 (b).

In this embodiment, the pre-processing belonging to the preset operation type can be postponed until the input feature map is split by using the dilated convolution layer. This helps to further optimize a middle-layer structure of the convolutional neural network, thereby improving performance of the convolutional neural network.

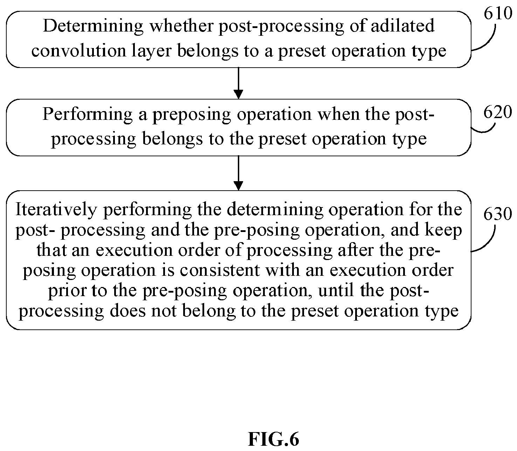

FIG. 6 shows a schematic diagram of a procedure of a preposing operation of a method for processing a convolutional neural network according to an embodiment of this disclosure. Subsequently, referring to FIG. 6, the procedure includes the following steps.

Step 610. Determining whether post-processing of the dilated convolution layer belongs to the preset operation type.

The preset operation type includes: $1 \times 1$ convolution, function activation, feature map multiplication, or feature map addition.

In this embodiment, the post-processing indicates a next processing step of the dilated convolution layer in the convolutional neural network.

Step 620. Performing a preposing operation when the post-processing belongs to the preset operation type.

The preposing operation includes: preposing the post-processing to be prior to the operation of fusing the plurality of local output feature maps by using the dilated convolution layer, and respectively performing the post-processing on the plurality of local output feature maps.

Step 630. Iteratively performing the determining operation for the post-processing and the preposing operation, and keep that an execution order of processing after the preposing operation is consistent with an execution order prior to the preposing operation, until the post-processing does not belong to the preset operation type.

Exemplary description is made with reference to FIG. 7 again. FIG. 7(b) shows some middle-layer structures of a convolutional neural network that is not performed a preposing operation. According to steps 620 and 630, the execution body can prepose the convolutional layers 740 and 750 to be prior to step 733, to obtain the convolutional neural network shown in FIG. 7 (c).

In this embodiment, the post-processing belonging to the preset operation type can be preposed to be prior to the operation of fusing various local output feature maps by using the dilated convolution layer. This helps to further optimize the middle-layer structure of the convolutional neural network, thereby improving the performance of the convolutional neural network.

Moreover, it can be learned from FIG. 7 that the procedures shown in FIG. 5 and FIG. 6 can be combined to further optimize the middle-layer structure of the convolutional neural network.

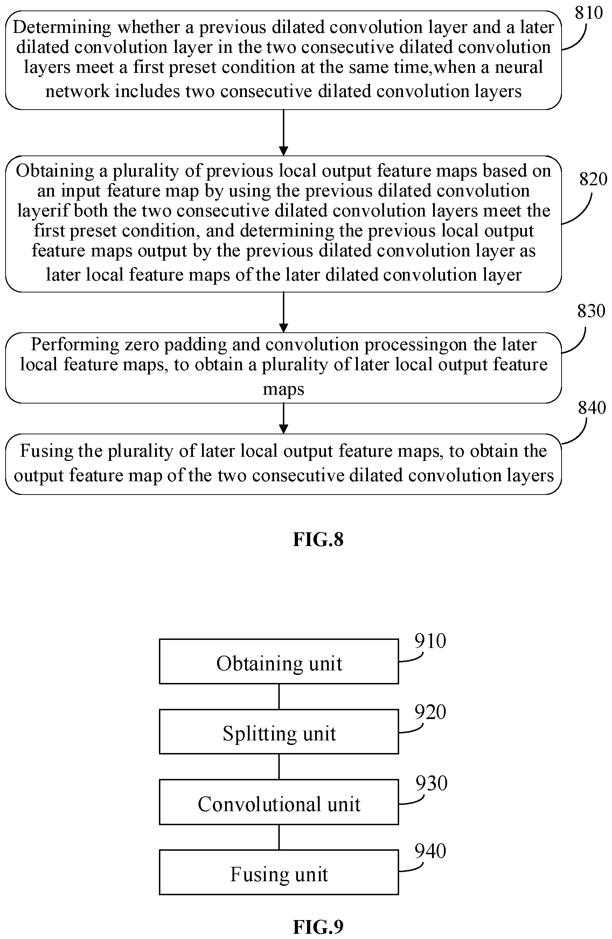

FIG. 8 shows a schematic flow chart of consecutive dilated convolutions of a processing method for a convolutional neural network according to an embodiment of this disclosure. Subsequently, referring to FIG. 8, the procedure includes the following steps.

Step 810. Determining whether a previous dilated convolution layer and a later dilated convolution layer in the two consecutive dilated convolution layers meet a first preset condition at the same time, when the convolutional neural network includes two consecutive dilated convolution layers.

The first preset condition includes: dilation rates of the previous dilated convolution layer and the later dilated convolution layer are the same, an output feature map of the previous dilated convolution layer is used by the later dilated convolution layer only, an input feature map and the output feature map of the previous dilated convolution layer have a same size, and an input feature map and an output feature map of the later dilated convolution layer have a same size.

Step 820. Obtaining a plurality of previous local output feature maps based on the input feature map by using the previous dilated convolution layer if both the two consecutive dilated convolution layers meet the first preset condition, and determining the previous local output feature maps output by the previous dilated convolution layer as later local feature maps of the later dilated convolution layer.

In this embodiment, the previous local output feature map represents a local output feature map that is obtained after the execution body splits the input feature map into a plurality of local feature maps by using the previous dilated convolution layer, and performs convolution processing on the local feature map.

When both the two consecutive dilated convolution layers meet the first preset condition, when the execution body processes the input feature map by using the previous dilated convolution layer, the step of fusing the various local output feature maps may not be performed, and the various local output feature maps are directly determined as the later local feature maps of the later dilated convolution layer. In this way, when the execution body performs processing by using the later dilated convolution layer, the later local feature maps can be obtained without splitting the input feature map.

In some optional implementations of this embodiment, determining the previous local output feature maps output by the previous dilated convolution layer as the later local feature maps of the later dilated convolution layer includes: determining an offset coefficient of the previous local output feature map as a subscript of the later local feature map.

In this way, the execution body omits a step of calculating the subscript of the local feature map based on the dilated convolution layer, thereby further reducing computational complexity during a dilated convolution process.

Step 830. Performing zero padding and convolution processing on the later local feature maps, to obtain a plurality of later local output feature maps.

Step 840. Fusing the plurality of later local output feature maps, to obtain output feature maps of the two consecutive dilated convolution layers.

Steps 840 and 850 correspond to steps 230 and 240 that are described above. Details are not described herein again.

It should be noted that when there are at least two consecutive dilated convolution layers that meet the first preset condition in the convolutional neural network, dilated convolution layers in a middle part can be used as a previous dilated convolution layer and a later dilated convolution layer in different combinations at the same time, to respectively perform steps 820 and 830. Steps 820 and 830 are performed for a plurality of times in a paired combination manner, until a last dilated convolution layer performs step 840 to obtain the output feature maps of a plurality of consecutive dilated convolution layers.

In the embodiment shown in FIG. 8, when both the two consecutive dilated convolution layers meet the first preset condition, the previous dilated convolution layer can omit the step of fusing the local output feature maps, and the later dilated convolution layer can omit the step of splitting the input feature map, so that memory access bandwidth of the fusion step and the splitting step is omitted. In this way, a memory access overhead when the convolutional neural network performs dilated convolution processing is further reduced.

Any processing method for a convolutional neural network provided in the embodiments of this disclosure can be implemented by any suitable device with a data processing capability, including but not limited to a terminal device and a server. Alternatively, any processing method for a convolutional neural network provided in the embodiments of this disclosure can be implemented by a processor. For example, the processor implements any processing method for a convolutional neural network described in the embodiments of this disclosure by invoking a corresponding instruction stored in a memory. Details are not described below again.

Exemplary apparatus

FIG. 9 shows a schematic structural diagram of a processing apparatus for a convolutional neural network according to an embodiment of this disclosure. As shown in FIG. 9, the apparatus includes: an obtaining unit 910, configured to obtain an input feature map; a splitting unit 920, configured to process the input feature map by using a dilated convolution layer of the convolutional neural network, to obtain a plurality of local feature maps; a convolutional unit 930, configured to perform zero padding on the plurality of local feature maps, and perform convolution processing on the plurality of zero-padded local feature maps, to obtain a plurality of local output feature maps; and a fusing unit 940, configured to fuse the plurality of local output feature maps, to obtain an output feature map processed by the dilated convolution layer.

In one implementation, the splitting unit 920 is further configured to: split the input feature map into a plurality of local feature maps based on a dilation rate of the dilated convolution layer.

In one implementation, the splitting unit 920 further includes: a subscript calculation module, configured to determine, based on the dilation rate of the dilated convolution layer, a quantity of the local feature maps to be obtained through splitting, and determine a subscript of each local feature map; an area calculation module, configured to determine a coverage area of the local feature map in the input feature map based on the dilation rate of the dilated convolution layer, a convolution kernel, and the subscript of the local feature map; and a splitting module, configured to split the input feature map into a plurality of local feature maps based on the coverage area of respective local feature maps in the input feature map.

In one implementation, the apparatus further includes: a zero-padding parameter calculation unit, configured to determine local zero-padding parameters corresponding to the plurality of local feature maps based on a zero-padding parameter and the dilation rate of the dilated convolution layer, and the subscript of the local feature map. The convolutional unit 930 further includes: a zero padding module, configured to perform zero padding on the plurality of local feature maps based on the local zero-padding parameters; and a convolution module, configured to perform convolution processing on the zero-padded local feature maps based on the convolution kernel of the dilated convolution layer, to obtain a plurality of local output feature maps.

In one implementation, the apparatus further includes: an offset calculation unit, configured to determine an offset coefficient of the local output feature map corresponding to the local feature map based on the zero-padding parameter and the dilation rate of the dilated convolution layer, and the subscript of the local feature map. The fusing unit 940 is further configured to fill the local output feature map into a to-be-output feature map based on the offset coefficient and the dilation rate of the dilated convolution layer, to obtain an output feature map performed with dilated convolution processing.

In one implementation, the apparatus further includes: a first determining unit, configured to determine whether pre-processing of the dilated convolution layer belongs to a preset operation type; a postponement unit, configured to perform a postponement operation when the pre-processing belongs to the preset operation type, where the postponement operation includes: postponing the pre-processing until the input feature map is split by using the dilated convolution layer, and respectively performing the pre- processing on the plurality of local feature maps; and a first iteration unit, configured to iteratively perform the determining operation for the pre- processing and the postponement operation, and keep that an execution order of processing after the postponement operation is consistent with an execution order prior to the postponement operation, until the pre-processing does not belong to the preset operation type.

In one implementation, the apparatus further includes: a second determining unit, configured to determine whether post-processing of the dilated convolution layer belongs to the preset operation type; a postponement unit, configured to perform a preposing operation when the post-processing belongs to the preset operation type, wherein the preposing operation includes: preposing the post-processing to be prior to the operation of fusing the plurality of local output feature maps by using the dilated convolution layer, and respectively performing the post-processing on the plurality of local output feature maps; a second iteration unit, configured to iteratively perform the determining operation for the post-processing and the preposing operation, and keep that an execution order of processing after the preposing operation is consistent with an execution order prior to the preposing operation, until the post-processing does not belong to the preset operation type.

In one implementation, the apparatus further includes: a third determining unit, configured to determine, when the convolutional neural network includes two consecutive dilated convolution layers, whether a previous dilated convolution layer and a later dilated convolution layer in the two consecutive dilated convolution layers meet a first preset condition at the same time, wherein the first preset condition includes: dilation rates of the previous dilated convolution layer and the later dilated convolution layer are the same, an output feature map of the previous dilated convolution layer is used by the later dilated convolution layer only, an input feature map and the output feature map of the previous dilated convolution layer have a same size, and an input feature map and an output feature map of the later dilated convolution layer have a same size; and a consecutive convolutional unit, configured to: obtain, if both the two consecutive dilated convolution layers meet the first preset condition, a plurality of previous local output feature maps based on the input feature map by using the previous dilated convolution layer, and determine the previous local output feature maps output by the previous dilated convolution layer as later local feature maps of the later dilated convolution layer; perform zero padding on the later local feature maps, and perform convolution processing on the zero-padded later local feature maps, to obtain a plurality of later local output feature maps; and fuse the plurality of later local output feature maps, to obtain the output feature maps of the two consecutive dilated convolution layers.

In one implementation, the consecutive convolutional unit is further configured to determine an offset coefficient of the previous local output feature map as a subscript of the later local feature map.

Exemplary electronic device

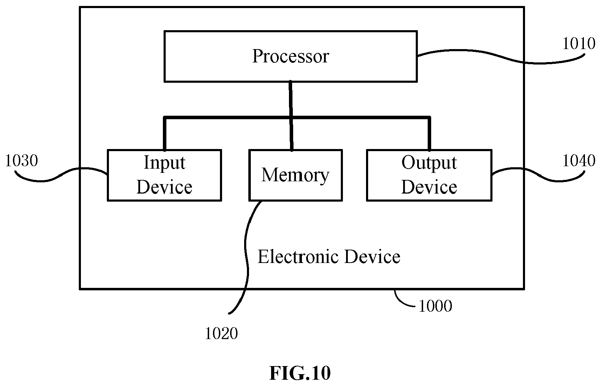

FIG. 10 shows a block diagram of an electronic device according to an embodiment of this disclosure. An electronic device according to an embodiment of this disclosure is described below with reference to FIG. 10.

As shown in FIG. 10, an electronic device 10 may include one or more processors 1010 and a memory 1020.

The processor 1010 may be a central processing unit (CPU) or another form of processing unit having a data processing capability and/or an instruction execution capability, and can control another component in the electronic device 1000 to perform a desired function.

The memory 1000 can include one or more computer program products. The computer program product can include various forms of computer readable storage media, such as a volatile memory and/or a non-volatile memory.

The volatile memory can include, for example, a random access memory (RAM) and/or a cache. The nonvolatile memory can include, for example, a read-only memory (ROM), a hard disk, and a flash memory. One or more computer program instructions can be stored on the computer readable storage medium. The processor 1010 can execute the program instructions to implement the processing method for a convolutional neural network according to various embodiments of this disclosure that are described above and/or other desired functions. Various contents such as an input signal, a signal component, and a noise component can also be stored in the computer readable storage medium.

In an example, the electronic device 1000 may further include an input device 1030 and an output device 1040. These components are connected with each other through a bus system and/or another form of connection mechanism (not shown).

For example, when the electronic device is a stand-alone device, the input device 1030 may be a communication network connector for receiving the collected input signal.

In addition, the input device 1030 may further include, for example, a keyboard and a mouse, etc..

The output device 1040 may output various information to the outside, including determined distance information, direction information, and the like. The output device 1040 may include, for example, a display, a loudspeaker, a printer, a communication network, and a remote output device connected to the communication network.

For simplicity, FIG. 10 shows only some of components in the electronic device 1000 that are related to this disclosure, and components such as a bus and an input/output interface are omitted. In addition, according to specific application situations, the electronic device 1000 may further include any other appropriate components.

Exemplary computer program product and computer readable storage medium

In addition to the foregoing methods and devices, the embodiments of this disclosure may also relate to a computer program product, which includes computer program instructions. When the computer program instructions are run by a processor, the processor is enabled to perform the steps of the processing method for a convolutional neural network according to the embodiments of this disclosure, that are described in the "exemplary method" part of this specification.

The computer program product may be program codes, written with one or any combination of a plurality of programming languages, that may be configured to perform the operations in the embodiments of this disclosure. The programming languages include an object-oriented programming language such as Java or C++, and further include a conventional procedural programming language such as a "C" language or a similar programming language. The program codes may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores a computer program instruction thereon. When the computer program instruction is run by the processor, the processor is enabled to perform the steps of the processing method for a convolutional neural network according to the embodiments of this disclosure, that are described in the "exemplary method" part of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, apparatus, or device, or any combination of the above. More specific examples (a non-exhaustive list) of the readable storage medium may include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be noted that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

The block diagrams of the equipment, the apparatus, the device, and the system involved in this disclosure are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and may be used interchangeably with "including but not limited to". The terms "or" and "and" used herein refer to the term "and/or", and may be used interchangeably with "and/or", unless the context clearly indicates otherwise. The term "such as" used herein refers to the phrase "such as but not limited to", and may be used interchangeably with "such as but not limited to".

It should be further pointed out that, various components or various steps in the apparatus, the device, and the method of this disclosure may be disassembled and/or recombined. These disassembling and/or recombinations shall be regarded as equivalent solutions of this disclosure.

**Claims**

1.  A processing method for a convolutional neural network, comprising:

    obtaining an input feature map;
    processing the input feature map by using a dilated convolution layer of the convolutional neural network, to obtain a plurality of local feature maps;
    obtaining a plurality of local output feature maps by performing zero padding on the plurality of local feature maps and performing convolution processing on the plurality of zero-padded local feature maps; and
    fusing the plurality of local output feature maps, to obtain an output feature map processed by the dilated convolution layer.

2.  The processing method according to claim 1, wherein the processing the input feature map by using a dilated convolution layer of the convolutional neural network, to obtain a plurality of local feature maps comprises:
    splitting the input feature map into the plurality of local feature maps based on a dilation rate of the dilated convolution layer.

3.  The processing method according to claim 2, wherein the splitting the input feature map into the plurality of local feature maps based on a dilation rate of the dilated convolution layer comprises:

    determining a quantity of the local feature maps to be obtained through splitting and a subscript of each of the local feature maps, based on the dilation rate of the dilated convolution layer;
    determining a coverage area of the respective local feature maps in the input feature map based on the dilation rate of the dilated convolution layer, a convolution kernel, and the respective subscripts of the local feature maps; and
    splitting the input feature map into the plurality of local feature maps based on the coverage area of respective local feature maps in the input feature map.

4.  The processing method according to claim 3, wherein before the performing zero padding on the plurality of local feature maps, the method further comprises:

    determining local zero-padding parameters respectively corresponding to the plurality of local feature maps based on zero-padding parameters and the dilation rate of the dilated convolution layer, and the respective subscripts of the local feature maps; and
    wherein the obtaining the plurality of local output feature maps by performing zero padding on the plurality of local feature maps and performing convolution processing on the plurality of zero-padded local feature maps comprises:

        performing zero padding on the plurality of local feature maps based on the local zero-padding parameters; and
        performing convolution processing on the zero-padded local feature maps based on the convolution kernel of the dilated convolution layer, to obtain the plurality of local output feature maps.

5.  The processing method according to claim 4, wherein after obtaining a plurality of local output feature maps, the method further comprises:

    determining an offset coefficient of the local output feature maps corresponding to the local feature maps based on the zero-padding parameters and the dilation rate of the dilated convolution layer, and the respective subscripts of the local feature maps; and
    wherein the fusing the plurality of local output feature maps, to obtain the output feature map processed by the dilated convolution layer comprises:

filling a to-be-output feature map with the local output feature maps based on the offset coefficient and the dilation rate of the dilated convolution layer, to obtain the output feature map processed by the dilated convolution layer.

6. The processing method according to any one of claims 1 to 5, wherein the method further comprises:

determining whether pre-processing of the dilated convolution layer belongs to a preset operation type;
performing a postponement operation when the pre-processing belongs to the preset operation type, wherein the postponement operation comprises: postponing the pre- processing until the input feature map is split by using the dilated convolution layer, and respectively performing the pre-processing on the plurality of local feature maps; and
iteratively performing the determining operation for the pre-processing and the postponement operation, and keeping that an execution order of processing after the postponement operation is consistent with an execution order prior to the postponement operation, until the pre-processing does not belong to the preset operation type.

7. The processing method according to any one of claims 1 to 6, wherein the method further comprises:

determining whether post-processing of the dilated convolution layer belongs to the preset operation type;
performing a preposing operation when the post-processing belongs to the preset operation type, wherein the preposing operation comprises: preposing the post-processing to be prior to the operation of fusing the plurality of local output feature maps by using the dilated convolution layer, and respectively performing the post-processing on the plurality of local output feature maps; and
iteratively performing the determining operation for the post-processing and the preposing operation, and keeping that an execution order of processing after the preposing operation is consistent with an execution order prior to the preposing operation, until the post-processing does not belong to the preset operation type.

8. The processing method according to any one of claims 1 to 7, wherein the method further comprises:

when the convolutional neural network includes two consecutive dilated convolution layers, determining whether a previous dilated convolution layer and a later dilated convolution layer in the two consecutive dilated convolution layers meet a first preset condition at the same time, wherein the first preset condition comprises: dilation rates of the previous dilated convolution layer and the later dilated convolution layer are the same, an output feature map of the previous dilated convolution layer is used by the later dilated convolution layer only, an input feature map and the output feature map of the previous dilated convolution layer have a same size, and an input feature map and an output feature map of the later dilated convolution layer have a same size; and
if both the two consecutive dilated convolution layers meet the first preset condition, performing the following:

obtaining a plurality of previous local output feature maps based on the input feature map by using the previous dilated convolution layer, and determining the previous local output feature maps as later local feature maps of the later dilated convolution layer;
obtaining a plurality of later local output feature maps by performing zero padding on the later local feature maps and performing convolution processing on the zero-padded later local feature maps; and
fusing the plurality of later local output feature maps, to obtain the output feature maps of the two consecutive dilated convolution layers.

9. The processing method according to claim 8, wherein determining the previous local output feature maps output by the previous dilated convolution layer as the later local feature maps of the later dilated convolution layer comprises: determining an offset coefficient of the previous local output feature map as a subscript of the later local feature maps.

10. A processing apparatus for a convolutional neural network, comprising:

an obtaining unit, configured to obtain an input feature map;
a splitting unit, configured to process the input feature map by using a dilated convolution layer of the convolutional neural network, to obtain a plurality of local feature maps;
a convolutional unit, configured to perform zero padding on the plurality of local feature maps, and perform convolution processing on the plurality of zero-padded local feature maps, to obtain a plurality of local output feature maps; and
a fusing unit, configured to fuse the plurality of local output feature maps, to obtain an output feature map processed by the dilated convolution layer.

**11.** The processing apparatus according to claim 10, wherein the splitting unit further comprises:

a subscript calculation module, configured to determine a quantity of the local feature maps to be obtained through splitting and a subscript of each of the local feature maps, based on the dilation rate of the dilated convolution layer;

an area calculation module, configured to determine a coverage area of the respective local feature maps in the input feature map based on the dilation rate of the dilated convolution layer, a convolution kernel, and the respective subscripts of the local feature maps; and

a splitting module, configured to split the input feature map into the plurality of local feature maps based on the coverage area of respective local feature maps in the input feature map.

**12.** The processing apparatus according to claim 10, wherein the processing apparatus further comprises:

a zero-padding parameter calculation unit, configured to determine local zero-padding parameters respectively corresponding to the plurality of local feature maps based on zero-padding parameters and the dilation rate of the dilated convolution layer, and the respective subscripts of the local feature maps.

**13.** The processing apparatus according to claim 10, wherein the processing apparatus further comprises:

an offset calculation unit, configured to determine an offset coefficient of the local output feature maps corresponding to the local feature maps based on the zero-padding parameters and the dilation rate of the dilated convolution layer, and the respective subscripts of the local feature maps.

**14.** A computer readable storage medium, comprising a computer program stored thereon, which, on being run, is configured to execute the method according to any one of claims 1 to 9.

**15.** An electronic device, wherein the electronic device comprises:

a processor; and

a memory, configured to store processor-executable instructions,

wherein the processor is configured to read the executable instructions from the memory, and execute the instructions to implement the method according to any one of claims 1 to 9.

Splitting    Convolution    Fusing

**FIG.1**

Obtaining an input feature map — 210

↓

Processing the input feature map by using a dilated convolution layer of a convolutional neural network, to obtain a plurality of local feature maps — 220

↓

Performing zero padding on the plurality of local feature maps, and performing convolution processing on the plurality of zero-padded local feature maps, to obtain a plurality of local output feature maps — 230

↓

Fusing the plurality of local output feature maps, to obtain an output feature map processed by the dilated convolution layer — 240

**FIG.2**

310

Obtaining an input feature map

320

Determining a quantity of local feature maps to be split and a subscript of each of the local feature maps, based on a dilation rate of a dilated convolution layer

330

Determining a coverage area of the respective local feature maps in the input feature map based on the dilation rate of the dilated convolution layer, a convolution kernel, and the respective subscripts of the local feature maps

340

Splitting the input feature map into a plurality of local feature maps based on the coverage area, in the input feature map, of respective local feature maps to be split

350

Determining local zero-padding parameters respectively corresponding to the plurality of local feature maps based on a zero-padding parameter of the dilated convolution layer, the dilation rate, and the subscripts of the local feature maps

360

Performing zero padding on the plurality of local feature maps based on the local zero-padding parameters

370

Performing convolution processing on the zero-padded local feature maps based on the convolution kernel of the dilated convolution layer, to obtain a plurality of local output feature maps

380

Determining an offset coefficient of the local output feature maps based on the zero-padding parameter of the dilated convolution layer, the dilation rate, and the subscripts of the localoutputfeature maps

390

Filling the local output feature maps into a to-be-output feature map based on the offset coefficient and the dilation rate of the dilated convolution layer, to obtain an output feature map performed with dilated convolution processing

**FIG.3**

**FIG.4**

**FIG.5**

Determining whether the pre-processing of adilated convolution layer belongs to a preset operation type — 510

Performing a postponement operation when the pre-processing belongs to the preset operation type — 520

Iteratively performing the determining operation for the pre-processing and the postponement operation, and keeping that an execution order of processing after the postponement operation is consistent with an execution order prior to the postponement operation, until the pre-processing does not belong to the preset operation type — 530

Determining whether post-processing of adilated convolution layer belongs to a preset operation type    610

Performing a preposing operation when the post-processing belongs to the preset operation type    620

Iteratively performing the determining operation for the post- processing and the pre-posing operation, and keep that an execution order of processing after the pre-posing operation is consistent with an execution order prior to the pre-posing operation, until the post-processing does not belong to the preset operation type    630

FIG.6

FIG.7

Determining whether a previous dilated convolution layer and a later dilated convolution layer in the two consecutive dilated convolution layers meet a first preset condition at the same time,when a neural network includes two consecutive dilated convolution layers ⌐ 810

Obtaining a plurality of previous local output feature maps based on an input feature map by using the previous dilated convolution layerif both the two consecutive dilated convolution layers meet the first preset condition, and determining the previous local output feature maps output by the previous dilated convolution layer as later local feature maps of the later dilated convolution layer ⌐ 820

Performing zero padding and convolution processingon the later local feature maps, to obtain a plurality of later local output feature maps ⌐ 830

Fusing the plurality of later local output feature maps, to obtain the output feature map of the two consecutive dilated convolution layers ⌐ 840

**FIG.8**

Obtaining unit ⌐ 910

Splitting unit ⌐ 920

Convolutional unit ⌐ 930

Fusing unit ⌐ 940

**FIG.9**

FIG.10

Europäisches
Patentamt
European
Patent Office
Office européen
des brevets

# EUROPEAN SEARCH REPORT

Application Number

EP 23 16 5280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/248413 A1 (JANG JUNWOO [KR]) 12 August 2021 (2021-08-12) * paragraph [0006] - paragraph [0039]; paragraph [0064] - paragraph [0161]; claims 1-21; figures 2-10 * | 1-15 | INV. G06N3/0464 G06N3/045 G06N3/063 |
| A | Dawei Li ET AL: "DeepRebirth: Accelerating Deep Neural Network Execution on Mobile Devices", arXiv.org, 16 August 2017 (2017-08-16), XP055660335, Ithaca, NY, USA Retrieved from the Internet: URL:https://arxiv.org/pdf/1708.04728v1.pdf [retrieved on 2020-01-21] * Section 3.1; figure 3 * | 6,7 | |
| A | LIU GUANGZHE ET AL: "ASKs: Convolution with any-shape kernels for efficient neural networks", ARXIV,, vol. 446, 18 March 2021 (2021-03-18), pages 32-49, XP086597015, DOI: 10.1016/J.NEUCOM.2021.03.039 [retrieved on 2021-03-18] * abstract; Sections 1-3; figures 2,4-6 * | 1-15 | TECHNICAL FIELDS SEARCHED (IPC)  G06N G06F |

The present search report has been drawn up for all claims

| Place of search | Date of completion of the search | Examiner |
|---|---|---|
| The Hague | 15 September 2023 | Klasen, TJ |

EPO FORM 1503 03.82 (P04C01)

**ANNEX TO THE EUROPEAN SEARCH REPORT
ON EUROPEAN PATENT APPLICATION NO.**

EP 23 16 5280

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2023

| Patent document cited in search report | Publication date | Patent family member(s) | Publication date |
|---|---|---|---|
| US 2021248413 A1 | 12-08-2021 | KR 20200066952 A | 11-06-2020 |
| | | US 2020175313 A1 | 04-06-2020 |
| | | US 2021248413 A1 | 12-08-2021 |

For more details about this annex : see Official Journal of the European Patent Office, No. 12/82

EPO FORM P0459